# EUROPEAN PATENT APPLICATION

(11) **EP 2 096 773 A1**
(43) Date of publication of application: **02.09.2009**
(21) Application number: 09151048.7
(22) Date of filing: 21.01.2009
(51) Int. Cl.: H04B 17/00

(54) **Data sending and receiving apparatus and method**

(30) Priority: 28.02.2008 JP 2008048460
(71) Applicant: Fujitsu Limited, Kawasaki-shi, Kanagawa 211-8588 (JP)
(72) Inventor: Sakurada, Kinya, Kawasaki-shi Kanagawa 211-8588 (JP); Ohba, Takeshi, Kawasaki-shi Kanagawa 211-8588 (JP)
(74) Representative: Weihs, Bruno Konrad

(57) **Abstract**

A data sending and receiving apparatus includes a sending state acquiring unit that monitors and acquires at least one of a sending process state indicating whether the sending process of the transmission data is being executed, and a signal strength of the transmission data; a signal strength measuring unit that measures a signal strength of the reception data; a measured value correcting unit that corrects a measured value of the signal strength of the reception data measured by the signal strength measuring unit, in accordance with at least one of the sending process state and an acquisition result of the signal strength of the transmission data acquired by the sending state acquiring unit; and a demodulating unit that demodulates the reception data using a corrected measured value corrected by the measured value correcting unit.

## Description

### FIELD

The embodiments discussed herein are directed to a data sending and receiving apparatus interposed between a terminal device and a communication device, for sending data, and to a data sending and receiving method.

### BACKGROUND

Conventionally, in a communication system that provides communication service between portable phones or television programs, there is known a data sending and receiving apparatus, interposed between a terminal device (for example, portable phone) and a communication device (for example, base station device), for sending transmission data that is received from the communication device and addressed to the terminal device, while demodulating reception data from the terminal device and sending to the communication device (see Japanese Laid-open Patent Publication No.2005-295396 and Japanese Laid-open Patent Publication No.2007-189871).

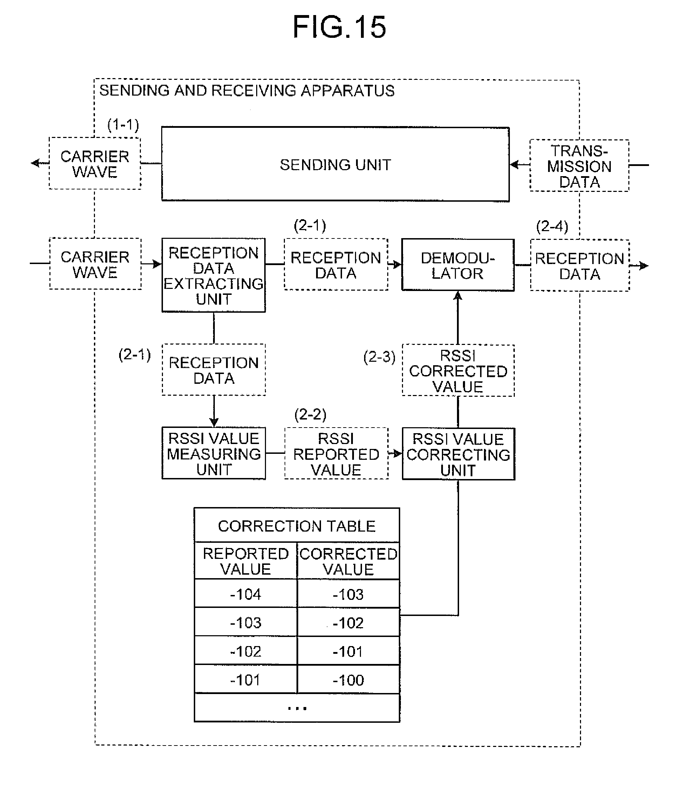

In the following, the sending and receiving apparatus will be concretely explained by way of an example. As depicted in the reference (1-1) in FIG. 15, the sending and receiving apparatus modulates transmission data received from a communication device at a transmitting unit, generates a carrier wave containing the transmission data, and sends to a terminal device.

Meanwhile, as depicted in FIG. 15, the sending and receiving apparatus includes, as constituting elements that are involved in sending and receiving of reception data, a correction table, a reception data extracting unit, a Receive Signal Strength Indication (or Indicator) (RSSI) value measuring unit, an RSSI value correcting unit and a demodulator (DEM).

Among these, the correction table stores RSSI corrected value (corrected value) for correcting signal strength of reception data in correlation with an RSSI reported value (reported value) which is a measurement result of the signal strength of the reception data.

Under such a presumption, as depicted in the reference (2-1) of FIG. 15, the reception data extracting unit receives a carrier wave outgoing from the terminal device, extracts the reception data contained in the carrier wave, and inputs the reception data to the RSSI value measuring unit and the demodulator.

Subsequently, as depicted in the reference (2-2) of FIG. 15, the RSSI value measuring unit measures an RSSI value (for example, -101 dBm (decibels per milliwatt: unit indicating strength of signal by electricity)) of the reception data extracted by the reception data extracting unit, and inputs a measurement result to the RSSI value correcting unit as an RSSI reported value.

The RSSI value correcting unit having received the RSSI reported value from the RSSI value measuring unit corrects the RSSI reported value to an RSSI corrected value by referring to the correction table as depicted in the reference (2-3) of FIG. 15, and inputs the RSSI corrected value to the demodulator. For example, the RSSI value correcting unit corrects the RSSI reported value of -101 dBm received from the RSSI value measuring unit to an RSSI corrected value of -100 dBm and inputs the RSSI corrected value to the demodulator.

The demodulator having received the RSSI corrected value from the RSSI value correcting unit and received the reception data from the reception data extracting unit demodulates the reception data using the RSSI corrected value, as depicted in the reference (2-4) of FIG. 15, and sends to the communication device. FIG. 15 is a view for explaining an outline of the conventional art.

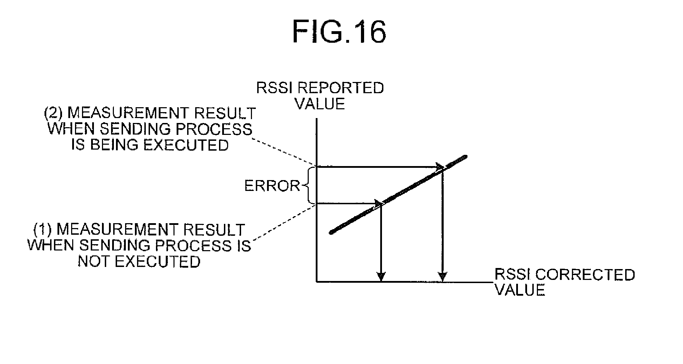

The foregoing conventional sending and receiving apparatus faces a problem that quality deterioration may occur in demodulating the reception data. To be more specific, in the conventional sending and receiving apparatus, an error occurs in measurement result of RSSI value possessed by the reception data between the case where sending process of transmission data for the terminal device is not executed as depicted in (1) of FIG. 16, and the case where sending process of transmission data for the terminal device is executed as depicted in (2) of FIG. 16, and the measurement result of RSSI value is not corrected to a correct RSSI value depending on some situations.

Therefore, the conventional sending and receiving apparatus faces a problem that quality deterioration may occur in demodulation process of reception data. FIG. 16 is a view for explaining the problem of the conventional art.

### SUMMARY

The present invention is made to solve the above described problems, and an object of the invention is to provide a data sending and receiving apparatus and method capable of demodulating the reception data with excellent quality.

According to an aspect of the invention, a data sending and receiving apparatus is interposed between a terminal device and a communication device, sends transmission data received from the communication device and addressed to the terminal device, and sends reception data from the terminal device to the communication device after demodulating. The data sending and receiving apparatus includes a sending state acquiring unit that monitors and acquires at least one of a sending process state indicating whether the sending process of the transmission data is being executed, and a signal strength of the transmission data; a signal strength measuring unit that measures a signal strength of the reception data; a measured value correcting unit that corrects a measured value of the signal strength of the reception data measured by the signal strength measuring unit, in accordance with at least one of the sending process state and an acquisition result of the signal strength of the transmission data acquired by the sending state acquiring unit; and a demodulating unit that demodulates the reception data using a corrected measured value corrected by the measured value correcting unit.

The objects and advantages of the invention will be realized and attained by unit of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWING(S)

FIG. 1 is a view for explaining an outline and features of a sending and receiving apparatus according to a first embodiment;
FIG. 2 is a block diagram of a configuration of the sending and receiving apparatus according to the first embodiment;
FIG. 3 is a view depicting one example of information stored in a correction table according to the first embodiment;
FIG. 4 is a flowchart of a flow of process by the sending and receiving apparatus according to the first embodiment;
FIG. 5 is a block diagram of a configuration of the sending and receiving apparatus according to a second embodiment;
FIG. 6 is a view depicting one example of information stored in a correction table according to the second embodiment;
FIG. 7 is a flowchart of a flow of process by the sending and receiving apparatus according to the second embodiment;
FIG. 8 is a block diagram of a configuration of the sending and receiving apparatus according to a third embodiment;
FIG. 9 is a view depicting one example of information stored in a correction table according to the third embodiment;
FIG. 10 is a flowchart of a flow of process by the sending and receiving apparatus according to the third embodiment;
FIG. 11 is a block diagram of a configuration of the sending and receiving apparatus according to a fourth embodiment;
FIG. 12 is a view depicting one example of information stored in a reference table according to the fourth embodiment;
FIG. 13 is a view for explaining one example of process by a corrected value calculating unit according to the fourth embodiment;
FIG. 14 is a flow chart of a flow of process by the sending and receiving apparatus according to the fourth embodiment;
FIG. 15 is a view for explaining an outline of conventional art; and
FIG. 16 is a view for explaining a problem of conventional art.

### DESCRIPTION OF EMBODIMENT(S)

Preferred embodiments of the data sending and receiving apparatus and method according to the present invention will be explained in detail with reference to accompanying drawings. In the following, a sending and receiving apparatus to which the present invention is applied will be explained as an example.

### [a] First Embodiment

In the following first embodiment, an outline and features of a sending and receiving apparatus according to the first embodiment, a configuration of the sending and receiving apparatus, and a flow of process of the sending and receiving apparatus will be explained sequentially, and effect of the first embodiment will be lastly explained.

### [Outline and features of sending and receiving apparatus according to the first embodiment]

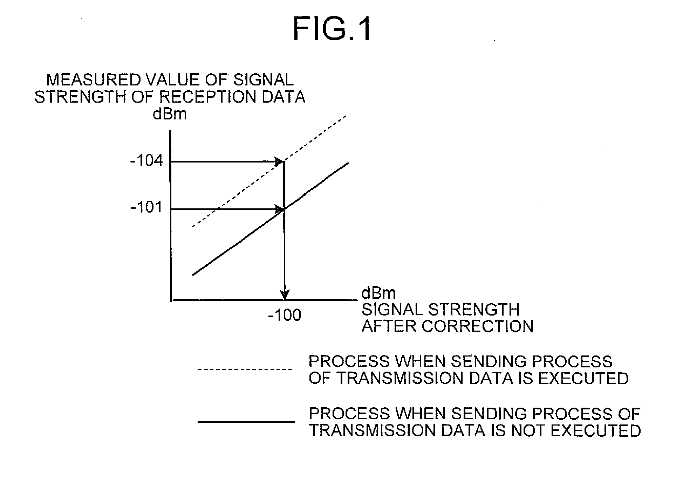

First, an outline and features of the sending and receiving apparatus according to the first embodiment will be explained with reference to FIG. 1. FIG. 1 is a view for explaining an outline and features of the sending and receiving apparatus according to the first embodiment.

The sending and receiving apparatus according to the first embodiment is outlined such that the sending and receiving apparatus is interposed between a terminal device and a communication device and sends transmission data received from the communication device and addressed to the terminal device while sending reception data from the terminal device to the communication device after demodulating. The sending and receiving apparatus according to the first embodiment is mainly featured by demodulating the reception data with excellent quality.

Specifically, the sending and receiving apparatus according to the first embodiment monitors and acquires at least one of a sending process state indicating whether a sending process of transmission data is being executed and signal strength of transmission data.

The sending and receiving apparatus according to the first embodiment then corrects a measured value of signal strength of reception data according to at least one of an acquisition result of the sending process state and the signal strength, and demodulates the reception data using the corrected measured value.

One concrete example will be explained below. As depicted in FIG. 1, the sending and receiving apparatus according to the first embodiment corrects a measured value of the signal strength of the reception data -104 dBm to a corrected value of -100 dBm when acquiring a sending process state indicating that a sending process of the transmission data is being executed. On the other hand, the sending and receiving apparatus according to the first embodiment corrects the measured value of the signal strength of the reception data -101 dBm to the corrected value -100 dBm when acquiring a sending process state indicating that a sending process of transmission data is not being executed.

Consequently, the sending and receiving apparatus according to the first embodiment is able to demodulate the reception data with excellent quality as is the above-mentioned main features.

### [Configuration of sending and receiving apparatus]

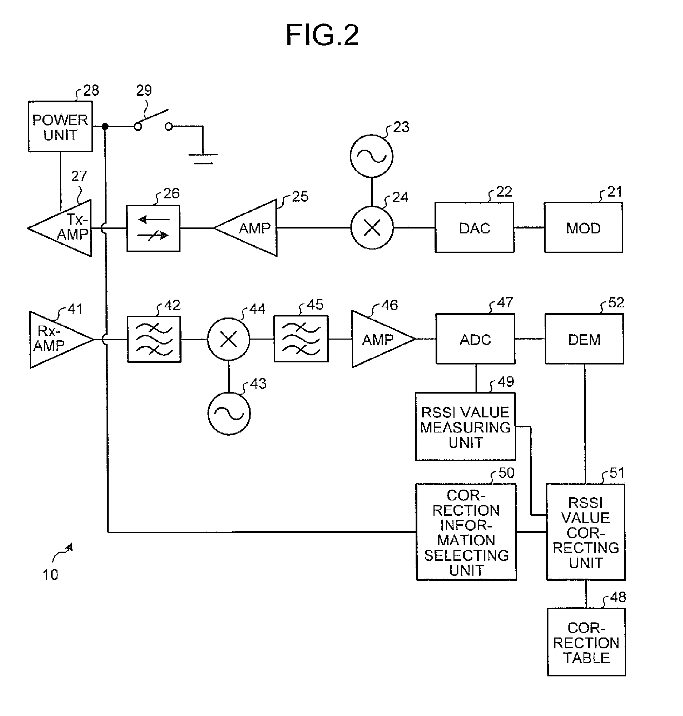

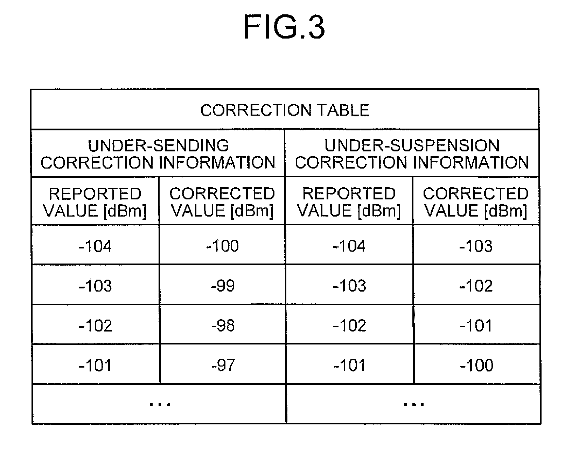

Next, using FIG. 2 and FIG. 3, a configuration of the sending and receiving apparatus depicted in FIG. 1 will be explained. FIG. 2 is a block diagram of a configuration of the sending and receiving apparatus according to the first embodiment. FIG. 3 is a view depicting one example of information stored in the correction table according to the first embodiment.

### [Configuration of transmission data sending and receiving circuit]

As depicted in FIG. 2, a sending and receiving apparatus 10 includes, as constituting elements involved in sending and receiving of transmission data, a Modulator (MOD) 21, a Digital to Analog Converter (DAC) 22, an oscillator 23, a mixer 24, an Amplifier (AMP) 25, an isolator 26, a Transmitter Amplifier (TxAMP) 27, a power unit 28 and a switch 29.

Among these, the MOD 21 modulates transmission data received from the communication device, and inputs the modulated transmission data to the DAC 22. The DAC 22 converts the transmission data in digital format received from the MOD 21 to transmission data in analog format, and inputs the transmission data to the mixer 24.

The oscillator 23 generates a signal of a certain frequency, and inputs the signal to the mixer 24. The mixer 24 changes frequency of the transmission data received from the DAC 22 using the signal of a certain frequency received from the oscillator 23, and inputs the transmission data to the AMP 25.

The transmission data signal input from the DAC 22 to the mixer 24 corresponds to a signal of Intermediate Frequency (IF) band, and the transmission data signal input from the mixer 24 to the AMP 25 corresponds to a signal of Radio Frequency (RF) band.

The AMP 25 amplifies the signal of the transmission data received from the mixer 24, and inputs to the TxAMP 27 via the isolator 26. The isolator 26 prevents sneak current from flowing from the TxAMP 27 to the AMP 25.

The TxAMP 27 further amplifies the signal of the transmission data received from the AMP 25, and sends a carrier wave containing the transmission data to the terminal device.

The power unit 28 supplies the TxAMP 27 with electricity. The switch 29 switches between whether the power unit 28 supplies the TxAMP 27 with electricity.

Here, when the power unit 28 supplies the TxAMP 27 with electricity under the control by the switch 29, the TxAMP 27 sends a carrier wave containing the transmission data to the terminal device, whereas when the power unit 28 does not supply the TxAMP 27 with electricity under the control by the switch 29, the TxAMP 27 stops sending the carrier wave containing the transmission data to the terminal device.

### [Configuration of reception data sending and receiving circuit]

The sending and receiving apparatus 10 includes, as constituting elements involved in sending and receiving of reception data, a Receiver Amplifier (RxAMP) 41, a band-pass filter 42, an oscillator 43, a mixer 44, a band-pass filter 45, an AMP 46, an Analog to digital Converter (ADC) 47, a correction table 48, an RSSI value measuring unit 49, a correction information selecting unit 50, an RSSI value correcting unit 51 and a Demodulator (DEM) 52.

The correction table 48 may be referred to as a correction information holding unit, the RSSI value measuring unit 49 to as a signal strength measuring unit, the correction information selecting unit 50 to as one or both of a sending state acquiring unit and correction information acquiring unit, the RSSI value correcting unit 51 to as a measured value correcting unit, and the DEM 52 to as a demodulating unit.

Among these, the RxAMP 41 receives the carrier wave outgoing from the terminal device, and amplifies the signal of the carrier wave. The RxAMP 41 inputs the carrier wave to the band-pass filter 42. The band-pass filter 42 clips the reception data contained in the carrier wave received from the RxAMP 41, and inputs the reception data to the mixer 44.

The oscillator 43 generates a signal of a certain frequency, and inputs the signal to the mixer 44. The mixer 44 changes frequency of the reception data received from the band-pass filter 42 using the signal of a certain frequency received from the oscillator 43, and inputs the reception data to the band-pass filter 45.

The reception data input from the band-pass filter 42 to the mixer 44 corresponds to a signal of RF band, and the reception data input from the mixer 44 to the band-pass filter 45 corresponds to a signal of IF band.

The band-pass filter 45 removes noise contained in the reception data in association with change in frequency of reception data by the mixer 44, and inputs the reception data to the AMP 46. The AMP 46 amplifies the signal of the reception data received from the mixer 44, and inputs the reception data to the ADC 47.

The ADC 47 converts the reception data in analog format received from the AMP 46 to reception data in digital format, and inputs the reception data to the RSSI value measuring unit 49 and the DEM 52.

Hereinafter, a series of processes from reception of the carrier wave by the RxAMP 41, to input of the reception data from the ADC 47 to the RSSI value measuring unit 49 and the DEM 52 is referred to as "reception data extracting process".

The correction table 48 holds pieces of correction information used for correction of a measured value of RSSI value of the reception data, for each sending process state indicating whether a sending process of the transmission data is being executed. Concretely, as depicted in FIG. 3, the correction table 48 stores, as under-sending correction information corresponding to a sending process state indicating that a sending process of the transmission data is being executed, RSSI corrected values for the respective correcting RSSI reported values, in correlation with the respective RSSI reported values. The correction table 48 also stores, as under-suspension correction information corresponding to a sending process state indicating that a sending process of the transmission data is not being executed, RSSI corrected values, in correlation with the respective RSSI reported values.

The RSSI value measuring unit 49 measures an RSSI value of the reception data. Concretely, the RSSI value measuring unit 49 measures an RSSI value of the reception data received from the ADC 47, and inputs a measurement result to the RSSI value correcting unit 51 as an RSSI reported value.

The correction information selecting unit 50 acquires a sending process state indicating whether a sending process of the transmission data is being executed. Then the correction information selecting unit 50 selects a piece of the correction information corresponding to an acquisition result of sending process state from among the pieces of the correction information held by the correction table 48.

Concretely, the correction information selecting unit 50 always monitors control of the power unit 28 by the switch 29, and determines whether the power unit 28 supplies the TxAMP 27 with electricity, or the power unit 28 does not supply the TxAMP 27 with electricity, thereby acquiring a sending process state indicating whether a sending process of transmission data is being executed by the TxAMP 27.

The correction information selecting unit 50 selects the under-sending correction information held by the correction table 48 when acquiring a sending process state indicating that a sending process of the transmission data is being executed by the TxAMP 27, and sends the selection result to the RSSI value correcting unit 51.

On the other hand, the correction information selecting unit 50 selects the under-suspension correction information held by the correction table 48 when acquiring a sending process state indicating that a sending process of the transmission data is not being executed by the TxAMP 27, and sends the selection result to the RSSI value correcting unit 51.

The RSSI value correcting unit 51 corrects the measured value of the RSSI value of the reception data measured by the RSSI value measuring unit 49, in accordance with the acquisition result of sending process state. Concretely, the RSSI value correcting unit 51 corrects the measured value of the RSSI value of the reception data using the correction information selected by the correction information selecting unit 50.

In one exemplary case, it is assumed that the RSSI value correcting unit 51 receives an RSSI reported value of -104 dBm from the RSSI value measuring unit 49 while receiving a selection result informing that the under-sending correction information is selected from the correction information selecting unit 50.

At this time, the RSSI value correcting unit 51 corrects the RSSI reported value -104 dBm to an RSSI corrected value of -100 dBm by referring to the under-sending correction information held by the correction table 48, and inputs the RSSI corrected value to the DEM 52.

In other case, it is assumed that the RSSI value correcting unit 51 receives an RSSI reported value of -101 dBm from the RSSI value measuring unit 49 while receiving a selection result informing that the under-suspension correction information is selected from the correction information selecting unit 50.

At this time, the RSSI value correcting unit 51 corrects the RSSI reported value -101 dBm to an RSSI corrected value of -100 dBm by referring to the under-suspension correction information held by the correction table 48, and inputs the RSSI corrected value to the DEM 52.

The DEM 52 demodulates the reception data using the measured value corrected by the RSSI value measuring unit 49. Concretely, the DEM 52 demodulates the reception data received from the ADC 47 by using the RSSI corrected value received from the RSSI value correcting unit 51. The DEM 52 then sends the demodulated reception data to the communication device.

### [Process by sending and receiving apparatus]

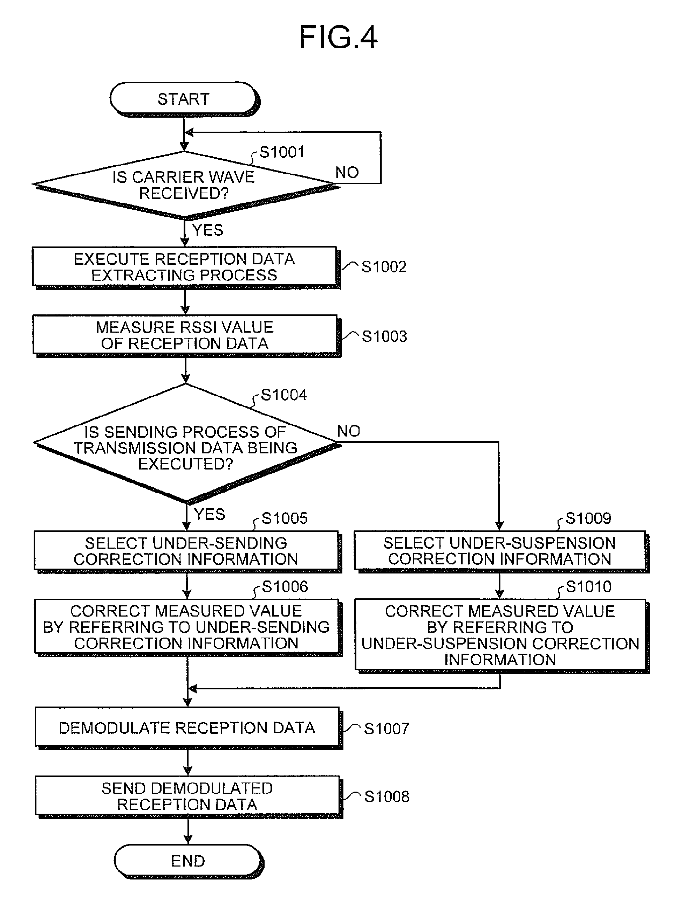

Next, referring to FIG. 4, a process by the sending and receiving apparatus 10 will be explained. FIG. 4 is a flow chart of a flow of process by the sending and receiving apparatus according to the first embodiment.

In the following, a flow of a reception data sending and receiving process which is characteristic of the sending and receiving apparatus 10 according to the first embodiment will be explained on assumption that the sending and receiving apparatus according to the first embodiment always acquires a sending process state indicating whether a sending process of transmission data is being executed.

As depicted in FIG. 4, upon reception of a carrier wave outgoing from the terminal device (Yes at Step S1001), the sending and receiving apparatus 10 executes a reception data extracting process (Step S1002), and measures an RSSI value of the reception data (Step S1003).

Here, when a sending process state indicating that a sending process of the transmission data is being executed is acquired (Yes in Step S1004), the sending and receiving apparatus 10 selects the under-sending correction information (Step S1005), and corrects a measured value of the RSSI value of the reception data by referring to the under-sending correction information (Step S1006).

The sending and receiving apparatus 10 demodulates the reception data using the corrected measured value (Step S1007), sends the demodulated reception data to the communication device (Step S1008), and ends the reception data sending and receiving process.

Returning to explanation of Step S1004, when a sending process state indicating that a sending process of transmission data is not being executed is acquired (No at Step S1004), the sending and receiving apparatus 10 selects the under-suspension correction information (Step S1009), and corrects a measured value of the RSSI value of the reception data by referring to the under-suspension correction information (Step S1010).

The sending and receiving apparatus 10 demodulates the reception data using the corrected measured value (Step S1007), sends the demodulated reception data to the communication device (Step S1008), and ends the reception data sending and receiving process.

### [Effect of the first embodiment]

As described above, according to the first embodiment, it is possible to demodulate the reception data with excellent quality. For example, according to the first embodiment, even when a noise occurring when the power unit 28 supplies the TxAMP 27 with electricity causes an error in measurement result of the RSSI value possessed by the reception data, the measurement result of the RSSI value can be corrected to a correct RSSI value, so that it is possible to demodulate the reception data with excellent quality.

### [b] Second Embodiment

In the first embodiment, there may be a case that the error occurring in measurement result of RSSI value possessed by the reception data varies depending on the signal level possessed by transmission data.

In light of the above, in the second embodiment, the case where a measured value of the RSSI value of the reception data is corrected in accordance with the signal level possessed by the transmission data will be explained. In the second embodiment, after explaining configuration of a sending and receiving apparatus according to the second embodiment and a flow of process by the sending and receiving apparatus, an effect achieved by the second embodiment will be explained.

### [Configuration of sending and receiving apparatus according to the second embodiment]

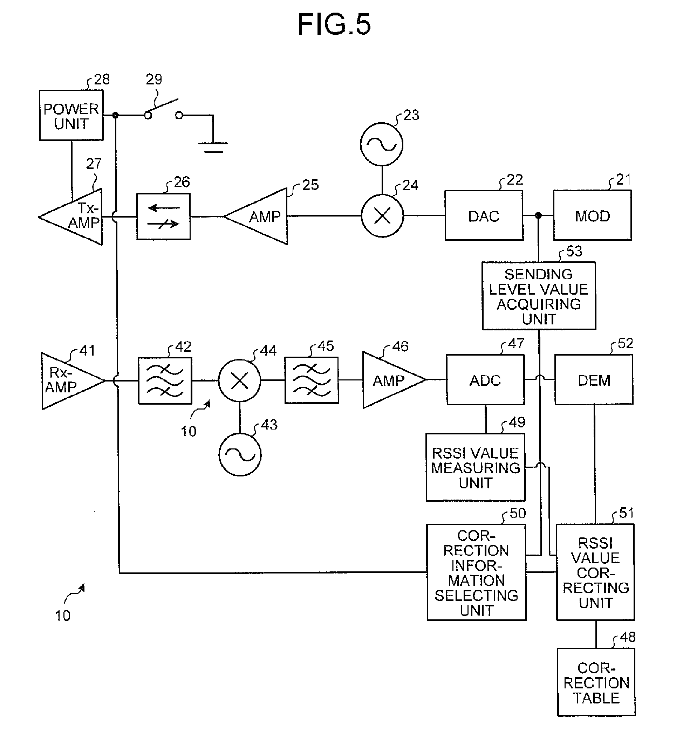

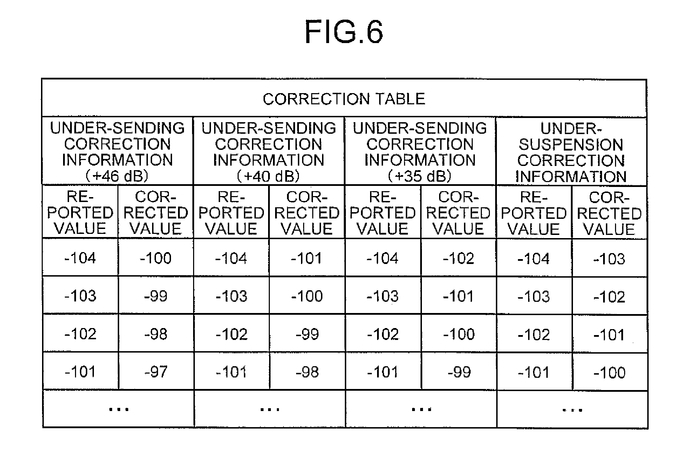

First, referring to FIG. 5 and FIG. 6, a configuration of the sending and receiving apparatus 10 according to the second embodiment will be explained. FIG. 5 is a block diagram of a configuration of the sending and receiving apparatus according to the second embodiment. FIG. 6 is a view depicting one example of information stored in the correction table according to the second embodiment.

The configuration of the sending and receiving apparatus 10 according to the second embodiment differs from the sending and receiving apparatus 10 according to the first embodiment in the points as will be described below, besides further including a sending level value acquiring unit 53. The sending level value acquiring unit 53 may be referred to as a sending state acquiring unit.

Specifically, the sending level value acquiring unit 53 acquires a signal level of the transmission data. Concretely, the sending level value acquiring unit 53 measures a signal level of the transmission data input from the MOD 21 to the DAC 22. Then the sending level value acquiring unit 53 inputs the measurement result of the signal level of the transmission data (for example, +46 dB (decibel: unit representing signal strength by electricity)) to the correction information selecting unit 50.

The correction table 48 holds pieces of correction information used for correction of a measured value of the signal strength of the reception data for each signal strength of the transmission data, for the case where the sending process state indicates that a sending process of the transmission data is being executed, and holds a piece of correction information for the case where the sending process state indicates that a sending process of the transmission data is suspended.

Concretely, in the correction table 48, as depicted in FIG. 6, under-sending correction information (+46 dB), under-sending correction information (+40 dB), and under-sending correction information (+35 dB) are held for the case where the sending process state indicates that a sending process of transmission data is being executed.
The correction table 48 also holds under-suspension correction information for the case where the sending process state indicates that a sending process of transmission data is suspended.

The correction table 48 stores the RSSI corrected values in correlation with the respective RSSI reported values for each correction information.

The "under-sending correction information (+46 dB)" is correction information corresponding to a sending process state indicating that a sending process of the transmission data is being executed, and corresponding to the measurement result (+46 dB) of the signal level of the transmission data.

The "under-sending correction information (+40 dB)" is correction information corresponding to a sending process state indicating that a sending process of the transmission data is being executed, and corresponding to the measurement result (+40 dB) of the signal level of the transmission data.

The "under-sending correction information (+35 dB)" is correction information corresponding to a sending process state indicating that a sending process of the transmission data is being executed, and corresponding to the measurement result (+35 dB) of the signal level of the transmission data.

The "under-suspension correction information" is correction information corresponding to a sending process state indicating that a sending process of the transmission data is not being executed.

The correction information selecting unit 50 acquires a sending process state indicating whether a sending process of the transmission data is being executed. And the correction information selecting unit 50 acquires a piece of the correction information in accordance with at least one of an acquisition result of sending process state and an acquisition result of the signal strength from among the pieces of the correction information held by the correction table 48.

Concretely, the correction information selecting unit 50 determines whether a sending process of the transmission data is being executed by the TxAMP 27, and selects the under-sending correction information held by the correction table 48 when it determines that a sending process of transmission data is being executed by the TxAMP 27.

Then the correction information selecting unit 50 further selects a piece of the under-sending correction information corresponding to the signal level value of the transmission data received from the sending level value acquiring unit 53 (for example, the under-sending correction information (+46 dB)) from among the pieces of the under-sending correction information held by the correction table 48, and sends the selection result to the RSSI value correcting unit 51.

On the other hand, the correction information selecting unit 50 selects the under-suspension correction information held by the correction table 48 when it determines that a sending process of transmission data is not being executed by the TxAMP 27, and sends the selected result to the RSSI value correcting unit 51.

The RSSI value correcting unit 51 corrects the measured value of the RSSI value of the reception data using the correction information selected by the correction information selecting unit 50. An exemplification is made to the case where the RSSI value correcting unit 51 receives an RSSI reported value of -104 dBm from the RSSI value measuring unit 49, while receiving a selection result informing that the under-sending correction information (+46 dB) is selected from the correction information selecting unit 50.

At this time, the RSSI value correcting unit 51 corrects the RSSI reported value -104 dBm to an RSSI corrected value of -100 dBm by referring to the under-sending correction information (+46 dB) held by the correction table 48, and inputs the RSSI corrected value to the DEM 52.

### [Process by sending and receiving apparatus according to the second embodiment]

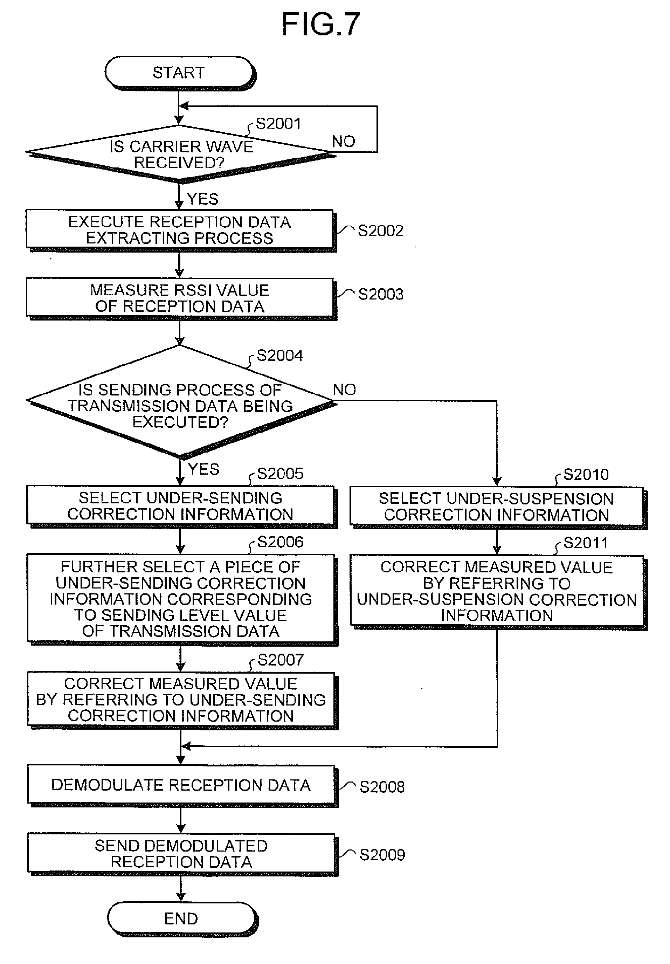

Next, a process by the sending and receiving apparatus according to the second embodiment will be explained by using FIG. 7. FIG. 7 is a flowchart of a flow of process by the sending and receiving apparatus according to the second embodiment.

In the following, a flow of a reception data sending and receiving process which is characteristic of the sending and receiving apparatus 10 according to the second embodiment will be explained on assumption that the sending and receiving apparatus according to the second embodiment always acquires a sending process state indicating whether a sending process of the transmission data is being executed and always acquires a signal level value of the transmission data.

As depicted in FIG. 7, upon reception of a carrier wave outgoing from the terminal device (Yes at Step S2001), the sending and receiving apparatus 10 executes a reception data extracting process (Step S2002), and measures an RSSI value of the reception data (Step S2003).

Here, when a sending process state indicating that a sending process of transmission data is being executed is acquired (Yes at Step S2004), the sending and receiving apparatus 10 selects the under-sending correction information (Step S2005), and further selects a piece of the under-sending correction information corresponding to the RSSI value possessed by the transmission data from among the pieces of the under-sending correction information (Step S2006).

Subsequently, the sending and receiving apparatus 10 corrects the measured value of the RSSI value of the reception data using the selected correction information (Step S2007), demodulates the reception data using the corrected measured value (Step S2008), sends the demodulated reception data to the communication device (Step S2009), and ends the reception data sending and receiving process.

Returning to the explanation of Step S2004, when a sending process state indicating that a sending process of the transmission data is not being executed is acquired (No in Step S2004), the sending and receiving apparatus 10 selects the under-suspension correction information (Step S2010), and corrects a measured value of the RSSI value of the reception data by referring to the under-suspension correction information (Step S2011).

Then the sending and receiving apparatus 10 demodulates the reception data using the corrected measured value (Step S2008), sends the demodulated reception data to the communication device (Step S2009), and ends the reception data sending and receiving process.

### [Effect of the second embodiment]

As described above, according to the second embodiment, even when an error occurs in a measurement result of RSSI value processed by the reception data, a measured value of the RSSI value of reception data is corrected according to a signal level value of the transmission data, so that it is possible to demodulate the reception data with excellent quality.

### [c] Third Embodiment

The second embodiment explains the case where a measured value of the RSSI value of the reception data is corrected according to an acquisition result of sending process state, and an acquisition result of the signal level value of the transmission data, however, a measured value of the RSSI value of the reception data may be corrected without using an acquisition result of the sending process state.

In light of the above, in the third embodiment, the case where a measured value of the RSSI value of the reception data is corrected in accordance with an acquisition result of the signal level value of the transmission data will be explained. In the third embodiment, after explaining configuration of a sending and receiving apparatus according to the third embodiment and a flow of process by the sending and receiving apparatus, an effect achieved by the third embodiment will be explained.

### [Configuration of sending and receiving apparatus according to third embodiment]

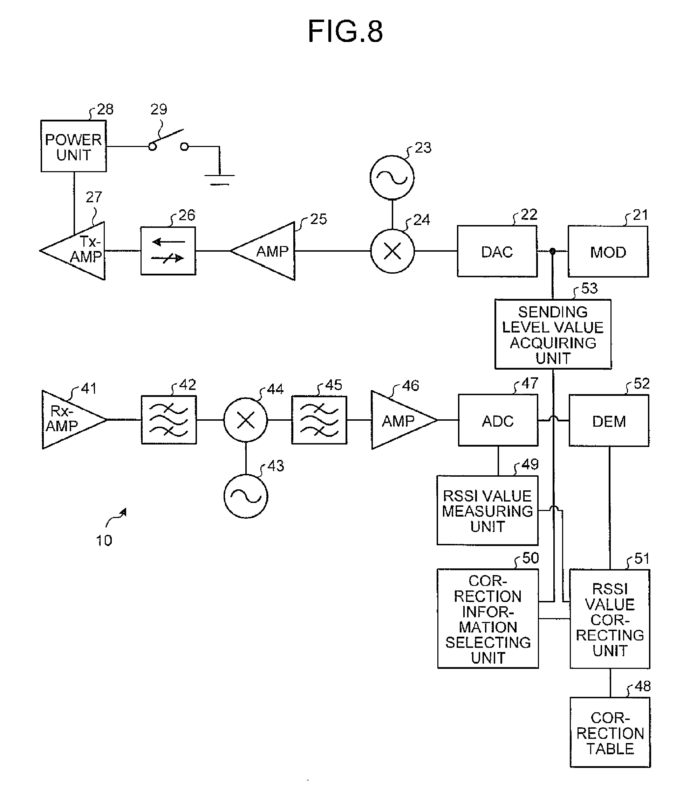

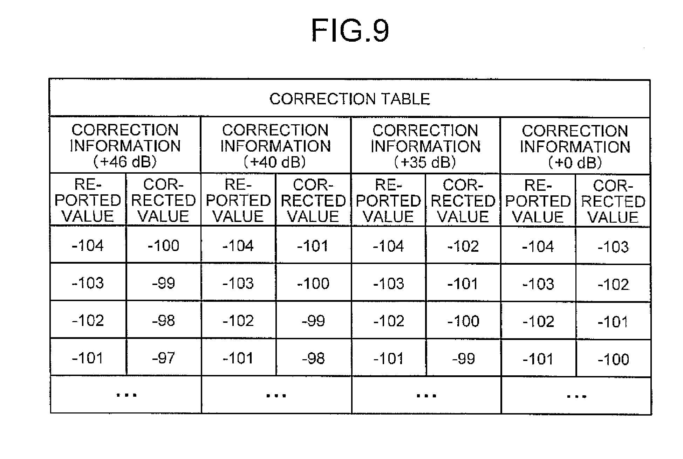

First, a configuration of a sending and receiving apparatus 10 according to a third embodiment will be explained by using FIG. 8 and FIG. 9. FIG. 8 is a block diagram of configuration of the sending and receiving apparatus according to the third embodiment. FIG. 9 is a view depicting one example of information stored in the correction table according to the third embodiment. Configuration of the sending and receiving apparatus 10 according to the third embodiment differs from that of the sending and receiving apparatus 10 according to the second embodiment in the following points.

To be more specific, the correction table 48 holds pieces of correction information used for correction of a measured value of the RSSI value of the reception data for each signal level value of the transmission data. Concretely, the correction table 48 holds correction information (+46 dB), correction information (+40 dB), correction information (+35 dB), and correction information (0 dB) as depicted in FIG. 9. The correction table 48 stores RSSI corrected values in correlation with the respective RSSI reported values for each piece of correction information.

The "correction information (+46 dB)" is correction information corresponding to the measurement result (+46 dB) of the signal level of the transmission data, "correction information (+40 dB)" is correction information corresponding to the measurement result (+40 dB) of the signal level of the transmission data, "correction information (+35 dB)" is correction information corresponding to the measurement result (+35 dB) of the signal level of the transmission data, and "correction information (0 dB)" is correction information corresponding to the measurement result (0 dB) of the signal level of the transmission data.

The correction information selecting unit 50 acquires a piece of the correction information from among the pieces of the correction information held by the correction table 48 in accordance with an acquisition result of the signal strength. Concretely, the correction information selecting unit 50 selects a piece of the correction information corresponding to a signal level value of the transmission data received from the sending level value acquiring unit 53, from among the pieces of the correction information held by the correction table 48, and sends the selection result to the RSSI value correcting unit 51.

In other words, the state that input of the transmission data from the MOD 21 to the DAC 22 is not made (namely, the state that the measurement result of the signal level of the transmission data is (0 dB)) can be determined as a state that a sending process of the transmission data is not being executed. This in turn means that the correction information selecting unit 50 determines whether a sending process of the transmission data is being executed by the TxAMP 27 based on a measurement result of the signal level of the transmission data.

### [Process executed by sending and receiving apparatus according to third embodiment]

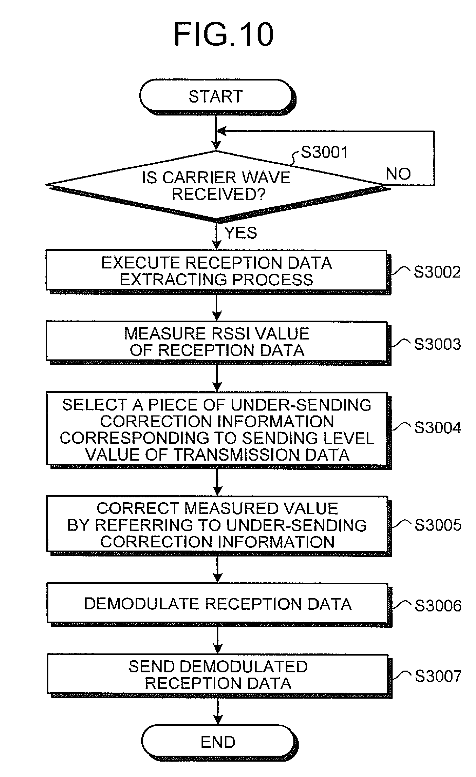

Next, by using FIG. 10, a process by the sending and receiving apparatus according to the third embodiment will be explained. FIG. 10 is a flowchart of a flow of process by the sending and receiving apparatus according to the third embodiment.

In the following, a flow of process which is characteristic of the sending and receiving apparatus 10 according to the third embodiment will be explained on assumption that the sending and receiving apparatus according to the third embodiment always acquires a signal level value of transmission data.

As depicted in FIG. 10, upon reception of a carrier wave outgoing from the terminal device (Yes at Step S3001), the sending and receiving apparatus 10 executes a reception data extracting process (Step S3002), and measures an RSSI value of the reception data (Step S3003).

Subsequently, the sending and receiving apparatus 10 selects a piece of the under-sending correction information corresponding to a signal level value possessed by the transmission data from among the pieces of the correction information (Step S3004), and corrects the measured value of the RSSI value of the reception data using the selected correction information (Step S3005).

Then the sending and receiving apparatus 10 demodulates the reception data using the corrected measured value (Step S3006), sends the demodulated reception data to the communication device (Step S3007), and ends the reception data sending and receiving process.

### [Effect of third embodiment]

As described above, according to the third embodiment, it is possible to demodulate the reception data with excellent quality without determining whether a sending process of transmission data is being executed.

### [d] Fourth Embodiment

In the second embodiment and the third embodiment, explanation was made for the case where the RSSI corrected values corresponding to the respective RSSI reported values are held for each signal level value of the transmission data, however, the RSSI corrected value may be calculated by using an acquisition result of the signal level value of the transmission data. In light of this, in the fourth embodiment, the case of calculating an RSSI corrected value will be explained. In the fourth embodiment, after explaining a configuration of a sending and receiving apparatus according to the fourth embodiment and a flow of process by the sending and receiving apparatus, an effect achieved by the fourth embodiment will be explained.

### [Configuration of sending and receiving apparatus according to fourth embodiment]

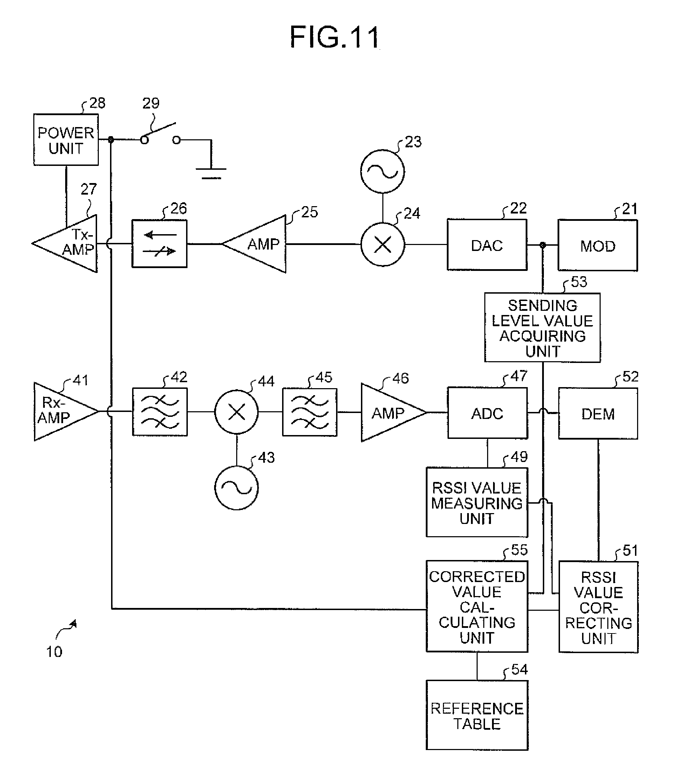

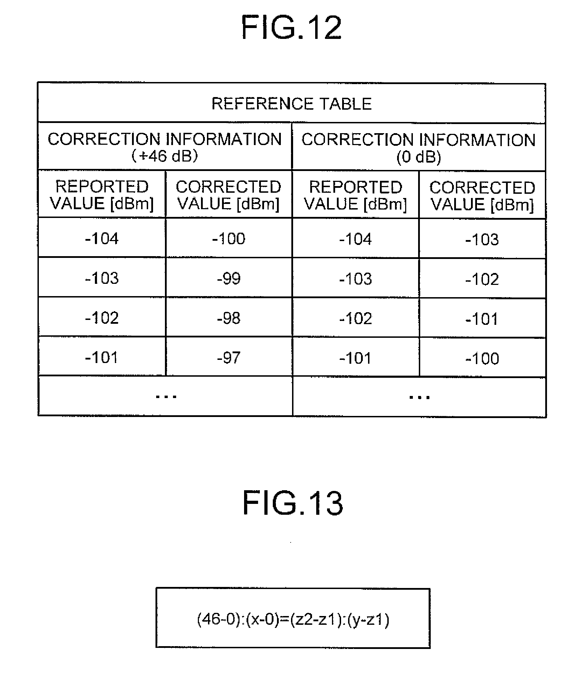

First, using FIG. 11, FIG. 12 and FIG. 13, a configuration of the sending and receiving apparatus 10 according to a fourth embodiment will be explained. FIG. 11 is a block diagram of configuration of the sending and receiving apparatus according to the fourth embodiment. FIG. 12 is a view depicting one example of information stored in a reference table according to the fourth embodiment. FIG. 13 is a view for explaining one example of process by a corrected value calculating unit according to the fourth embodiment.

The sending and receiving apparatus 10 according to the fourth embodiment includes a reference table 54 in place of the correction table 48, and includes a corrected value calculating unit 55 in place of the correction information selecting unit 50. The reference table 54 corresponds to "correction information holding unit" and the corrected value calculating unit 55 corresponds to "corrected value calculating unit" described in claims. Configuration of the sending and receiving apparatus 10 according to the fourth embodiment further differs from that of the sending and receiving apparatus 10 according to the second embodiment in the following points.

To be more specific, the reference table 54 holds pieces of correction information used for correction of a measured value of the RSSI value of the reception data, for each predetermined reference value of the signal levels of the transmission data. Concretely, the reference table 54 holds correction information (+46 dB) and correction information (0 dB) as depicted in FIG. 12. The reference table 54 stores the RSSI corrected values in correlation with the respective RSSI reported values for each piece of correction information.

"+46 dB" and "0 dB" correspond to the predetermined reference values of the signal levels of the transmission data.

The corrected value calculating unit 55 calculates a corrected value for correcting the signal strength of the reception data using an acquisition result of the RSSI value by the sending level value acquiring unit 53 and each correction information held by the reference table 54. For example, the corrected value calculating unit 55 calculates a corrected value for correcting the signal strength of the reception data by proportional calculation.

In one concrete example for explanation, it is assumed that the corrected value calculating unit 55 receives an RSSI reported value of -104 dBm from the RSSI value measuring unit 49, while receiving the signal level "+23 dB" of the transmission data from the sending level value acquiring unit 53.

At this time, the corrected value calculating unit 55 assigns "+23" to "x" of the formula depicted in FIG. 13. Also, the corrected value calculating unit 55 acquires an RSSI corrected value of -100 dBm corresponding to the RSSI reported value -104 dBm by referring to the correction information (+46 dB), and assigns "-100" to "z2" of the formula depicted in FIG. 13. Also, the corrected value calculating unit 55 acquires an RSSI corrected value of-103 dBm corresponding to the RSSI reported value -104 dBm by referring to the correction information (0 dB), and assigns "-103" to "z1" of the formula depicted in FIG. 13. "46" and "0" in the formula depicted in FIG. 13 correspond to the predetermined reference values of the signal levels of the transmission data.

Then the corrected value calculating unit 55 calculates "y" (calculates y = -101.5 in the example) in the formula depicted in FIG. 13 which corresponds to the corrected value for correcting the signal strength of the reception data. And the corrected value calculating unit 55 inputs the calculated corrected value to the RSSI value correcting unit 51.

The RSSI value correcting unit 51 corrects the measured value of the signal strength of the reception data to the corrected value calculated by the corrected value calculating unit 55.

### [Process by sending and receiving apparatus according to the fourth embodiment]

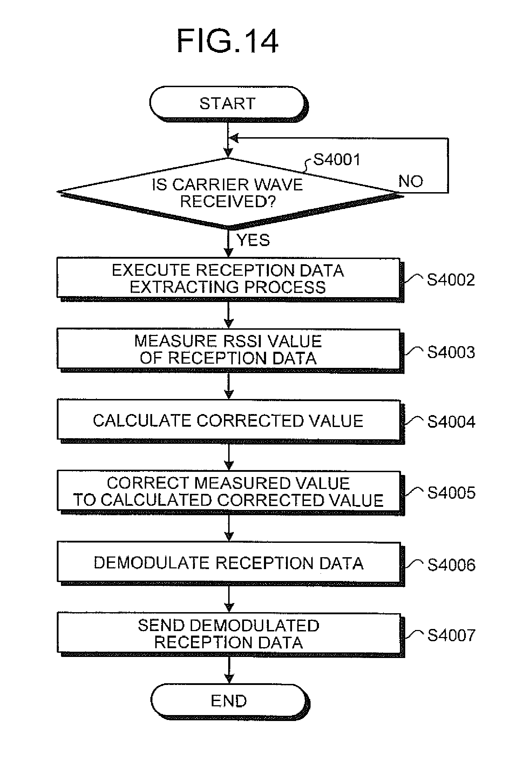

Next, using FIG. 14, a process by the sending and receiving apparatus according to the fourth embodiment will be explained. FIG. 14 is a flowchart of a flow of process by the sending and receiving apparatus according to the fourth embodiment.

In the following, a flow of process which is characteristic of the sending and receiving apparatus 10 according to the fourth embodiment will be explained on assumption that the sending and receiving apparatus according to the fourth embodiment always acquires a signal level value of the transmission data.

As depicted in FIG. 14, upon reception of a carrier wave outgoing from the terminal device (Yes at Step S4001), the sending and receiving apparatus 10 executes a reception data extracting process (Step S4002), and measures an RSSI value of reception data (Step S4003).

Subsequently, the sending and receiving apparatus 10 calculates a corrected value for correcting the signal strength of the reception data, using an acquisition result of the signal level value of the transmission data and each correction information (Step S4004), and corrects a measured value of the signal strength of the reception data to the calculated corrected value (Step S4005).

Then the sending and receiving apparatus 10 demodulates the reception data by using the corrected measured value (Step S4006), sends the demodulated reception data to the communication device (Step S4007), and ends the reception data sending and receiving process.

### [Effect of fourth embodiment]

As described above, according to the fourth embodiment, it is possible to demodulate the reception data with excellent quality while flexibly responding to the signal level of the transmission data. Furthermore, according to the fourth embodiment, an effect arises that information amount of the correction information to be held can be controlled.

### [d] Fifth Embodiment

While the first to fourth embodiments have been explained, the present invention may be practiced in various different forms other than the above embodiments. In the following, other embodiment will be explained as the fifth embodiment.

For example, in the first to fourth embodiments, the case where the RSSI corrected values are stored as the correction information in correlation with the respective RSSI reported values in the correction table 48 (reference table 54) is explained. However, the present example is not limited thereto. Application to the present example is allowed by holding information capable of correcting a measured value of the RSSI value of the measured reception data (for example, differential value of the RSSI values before and after correction, calculation formula for calculating the RSSI value after correction from the RSSI value before correction).

Further, in the first embodiment, the case where control of the power unit 28 by the switch 29 is monitored is explained, however, the present example is not limited thereto, and a driving state of a constituting element that causes an error in measurement result of the RSSI value processed by the reception data may be monitored.

Processing sequences, control sequences, concrete names, information including various data and parameters (for example, storage information depicted in FIG. 3, FIG. 6, FIG. 9 and FIG. 12 and calculation formula depicted in FIG. 13) depicted in the specification and drawings may be arbitrarily changed unless otherwise specified.

Each constituting element of each depicted apparatus is given in a functionally conceptual manner, and is not necessarily requested to be configured physically as illustrated in drawings. That is, concrete forms of distribution and integration of each apparatus are not limited to those illustrated in drawings, and the whole or part thereof may be functionally or physically distributed or integrated by appropriate units depending on various loads or use situations. For example, the correction information selecting unit 50 and the RSSI value correcting unit 51 depicted in FIG. 2 may be integrated.

Furthermore, each processing function executed by each apparatus may be fully or partly implemented by a CPU or a program analyzed and executed by the CPU, or implemented by hardware according to wired logic.

All examples and conditional language recited herein are intended for pedagogical purposes to aid the reader in urderstanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.

## Claims

1. A data sending and receiving apparatus, interposed between a terminal device and a communication device, that sends transmission data received from the communication device and addressed to the terminal device, and sends reception data from the terminal device to the communication device after demodulating, the data sending and receiving apparatus comprising:
a sending state acquiring unit that monitors and acquires at least one of a sending process state indicating whether the sending process of the transmission data is being executed, and a signal strength of the transmission data;
a signal strength measuring unit that measures a signal strength of the reception data;
a measured value correcting unit that corrects a measured value of the signal strength of the reception data measured by the signal strength measuring unit, in accordance with at least one of the sending process state and an acquisition result of the signal strength of the transmission data acquired by the sending state acquiring unit; and
a demodulating unit that demodulates the reception data using a corrected measured value corrected by the measured value correcting unit.

2. The data sending and receiving apparatus according to claim 1, further comprising:
a correction information holding unit that holds pieces of correction information used for correction of the measured value of the signal strength of the reception data, for each sending process state indicating whether a sending process of the transmission data is being executed; and
a correction information acquiring unit that acquires a piece of the correction information corresponding to an acquisition result of the sending process state acquired by the sending state acquiring unit, from among the pieces of the correction information held by the correction information holding unit,
wherein the measured value correcting unit corrects the measured value of the signal strength of the reception data using the correction information acquired by the correction information acquiring unit.

3. The data sending and receiving apparatus according to claim 1, further comprising:
a correction information holding unit that holds a piece or pieces of correction information used for correction of the measured value of the signal strength of the reception data for each signal strength of the transmission data, for the case where the sending process state acquired by the sending state acquiring unit indicates that a sending process of the transmission data is being executed, and holds a piece or pieces of correction information for the case where the sending process state acquired by the sending state acquiring unit indicates that a sending process of the transmission data is suspended, and
a correction information acquiring unit that acquires a piece of the correction information corresponding to at least one of an acquisition result of the sending process state and an acquisition result of the signal strength of the transmission data acquired by the sending state acquiring unit, from among the pieces of the correction information held by the correction information holding unit,
wherein the measured value correcting unit corrects the measured value of the signal strength of the reception data using the correction information acquired by the correction information acquiring unit.

4. The data sending and receiving apparatus according to claim 1, further comprising:
a correction information holding unit that holds pieces of correction information used for correction of the measured value of the signal strength of the reception data, for each signal strength of the transmission data; and
a correction information acquiring unit that acquires a piece of the correction information corresponding to an acquisition result of the signal strength of the transmission data acquired by the sending state acquiring unit, from among the pieces of the correction information held by the correction information holding unit,
wherein the measured value correcting unit corrects the measured value of the signal strength of the reception data using the correction information acquired by the correction information acquiring unit.

5. The data sending and receiving apparatus according to claim 1, further comprising:
a correction information holding unit that holds pieces of correction information used for correction of the measured value of the signal strength of the reception data for each predetermined reference value of the signal strength of the transmission data, and
a corrected value calculating unit that calculates a correction value for correcting the signal strength of the reception data, using an acquisition result of the signal strength acquired by the sending state acquiring unit and the correction information held by the correction information holding unit,
wherein the measured value correcting unit corrects the measured value of the signal strength of the reception data to the corrected value calculated by the corrected value calculating unit.

6. A data sending and receiving method using a data sending and receiving apparatus which is interposed between a terminal device and a communication device, for sending transmission data received from the communication device and addressed to the terminal device and sending reception data from the terminal device to the communication device after demodulating, the data sending and receiving method comprising:
monitoring and acquiring at least one of a sending process state indicating whether the sending process of the transmission data is being executed, and a signal strength of the transmission data;
measuring a signal strength of the reception data;
correcting a measured value of the signal strength of the reception data, according to at least one of the sending process state and the acquisition result of the signal strength of the transmission data; and
demodulating the reception data using a corrected measured value obtained in the correcting.

7. The data sending and receiving method according to claim 6, further comprising:
holding pieces of correction information used for correction of the measured value of the signal strength of the reception data, for each sending process state indicating whether a sending process of the transmission data is being executed; and
acquiring a piece of the correction information corresponding to an acquisition result of the acquired sending process state, from among the pieces of the correction information held in the holding,
wherein the correcting includes correcting the measured value of the signal strength of the reception data using the acquired correction information.

8. The data sending and receiving method according to claim 6, further comprising:
holding a piece or pieces of correction information used for correction of the measured value of the signal strength of the reception data for each signal strength of the transmission data, for the case where the acquired sending process state indicates that a sending process of the transmission data is being executed, and holding a piece or pieces of correction information for the case where the acquired sending process state indicates that a sending process of the transmission data is suspended, and
acquiring a piece of the correction information corresponding to at least one of an acquisition result of the sending process state and an acquisition result of the signal strength of the transmission data, from among the piece or pieces of the correction information held in the holding,
wherein, the correcting includes correcting the measured value of the signal strength of the reception data using the acquired correction information.

9. The data sending and receiving method according to claim 6, further comprising:
holding pieces of correction information used for correction of the measured value of the signal strength of the reception data, for each signal strength of the transmission data; and
acquiring a piece of the correction information corresponding to an acquisition result of the acquired signal strength of the transmission data, from among the pieces of the correction information held in the holding,
wherein the correcting includes correcting the measured value of the signal strength of the reception data using the acquired correction information.

10. The data sending and receiving method according to claim 6, further comprising:
holding pieces of correction information used for correction of the measured value of the signal strength of the reception data for each predetermined reference value of the signal strength of the transmission data, and
calculating a correction value for correcting the signal strength of the reception data, using an acquisition result of the signal strength acquired in the monitoring and acquiring and the correction information held in the holding,
wherein the correcting includes correcting the measured value of the signal strength of the reception data to the calculated corrected value.

11. A computer readable storage medium containing instructions for a data sending and receiving process that sends transmission data received from a communication device and addressed to a terminal device and sends reception data from the terminal device to the communication device after demodulating, wherein the instructions, when executed by a computer, causes the computer to perform:
monitoring and acquiring at least one of a sending process state indicating whether the sending process of the transmission data is being executed, and a signal strength of the transmission data;
measuring a signal strength of the reception data;
correcting a measured value of the signal strength of the reception data, according to at least one of the sending process state and the acquisition result of the signal strength of the transmission data; and
demodulating the reception data using a corrected measured value obtained in the correcting.

12. The computer readable storage medium according to claim 11, wherein the instructions further causes the computer to perform:
holding pieces of correction information used for correction of the measured value of the signal strength of the reception data, for each sending process state indicating whether a sending process of the transmission data is being executed; and
acquiring a piece of the correction information corresponding to an acquisition result of the acquired sending process state, from among the pieces of the correction information held in the holding,
wherein the correcting includes correcting the measured value of the signal strength of the reception data using the acquired correction information.

13. The computer readable storage medium according to claim 11, wherein the instructions further causes the computer to perform:
holding a piece or pieces of correction information used for correction of the measured value of the signal strength of the reception data for each signal strength of the transmission data, for the case where the acquired sending process state indicates that a sending process of the transmission data is being executed, and holding a piece or pieces of correction information for the case where the acquired sending process state indicates that a sending process of the transmission data is suspended, and
acquiring a piece of the correction information corresponding to at least one of an acquisition result of the sending process state and an acquisition result of the signal strength of the transmission data, from among the piece or pieces of the correction information held in the holding,
wherein, the correcting includes correcting the measured value of the signal strength of the reception data using the acquired correction information.

14. The computer readable storage medium according to claim 11, wherein the instructions further causes the computer to perform:
holding pieces of correction information used for correction of the measured value of the signal strength of the reception data, for each signal strength of the transmission data; and
acquiring a piece of the correction information corresponding to an acquisition result of the acquired signal strength of the transmission data, from among the pieces of the correction information held in the holding,
wherein the correcting includes correcting the measured value of the signal strength of the reception data using the acquired correction information.

15. The computer readable storage medium according to claim 11, wherein the instructions further causes the computer to perform:
holding pieces of correction information used for correction of the measured value of the signal strength of the reception data for each predetermined reference value of the signal strength of the transmission data, and
calculating a correction value for correcting the signal strength of the reception data, using an acquisition result of the signal strength acquired in the monitoring and acquiring and the correction information held in the holding,
wherein the correcting includes correcting the measured value of the signal strength of the reception data to the calculated corrected value.
